(19) **Europäisches Patentamt**
**European Patent Office**
**Office européen des brevets**

(11) **EP 3 098 056 A1**

(12) **EUROPEAN PATENT APPLICATION**
published in accordance with Art. 153(4) EPC

(43) Date of publication:
**30.11.2016 Bulletin 2016/48**

(51) Int Cl.:
***B29C 49/22*** *(2006.01)*     ***B29C 49/08*** *(2006.01)*
***B65D 1/00*** *(2006.01)*     ***B65D 1/02*** *(2006.01)*

(21) Application number: **15740476.5**

(22) Date of filing: **23.01.2015**

(86) International application number:
**PCT/JP2015/051807**

(87) International publication number:
**WO 2015/111690 (30.07.2015 Gazette 2015/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.01.2014 JP 2014011292**
**24.01.2014 JP 2014011293**
**24.01.2014 JP 2014011294**

(71) Applicant: **Toyo Seikan Group Holdings, Ltd.**
**Shinagawa-ku**
**Tokyo 141-8627 (JP)**

(72) Inventors:
• **HIRAYAMA, Yukiko**
**Yokohama-shi**
**Kanagawa 240-0062 (JP)**
• **YAMADA, Toshiki**
**Yokohama-shi**
**Kanagawa 240-0062 (JP)**
• **NAGAHAMA, Hideaki**
**Yokohama-shi**
**Kanagawa 240-0062 (JP)**

(74) Representative: **Raynor, Stuart Andrew**
**J A Kemp**
**14 South Square**
**Gray's Inn**
**London WC1R 5JJ (GB)**

(54) **MULTILAYER STRETCH BLOW MOLDED CONTAINER AND MULTILAYER PREFORM**

(57) A multilayered stretch-blow-molded container obtained by biaxially stretch-blow-molding a multilayered preform that includes inner and outer layers of an ethylene terephthalate polyester resin, and at least one intermediate layer of a lowly crystallizable ethylene terephthalate polyester resin and a gas-barrier aromatic polyamide resin, wherein a difference of refractive index ($\triangle$RI) between said lowly crystallizable ethylene terephthalate polyester resin and said gas-barrier aromatic polyamide resin represented by the following formula (1),

$$\triangle RI = \left| RI_E - RI_A \right| \qquad\qquad (1)$$

wherein $RI_E$ and $RI_A$ are refractive indices of injection-molded plates made, respectively, from the lowly crystallizable ethylene terephthalate polyester resin and the aromatic polyamide resin after they have been biaxially stretched into 3 x 3 times simultaneously,
is not more than 0.03. The multilayered stretch-blow-molded container has such an excellent transparency that the haze in the body portion is not more than 3% and, further, has excellent gas-barrier property and interlayer adhesiveness.

**(Cont. next page)**

EP 3 098 056 A1

# Fig. 2

**Description**

Technical Field:

This invention relates to a multilayered stretch-blow-molded container comprising a polyester resin and to a multilayered preform capable of forming the container. More specifically, the invention relates to a multilayered stretch-blow-molded container excellent in gas-barrier property, interlayer adhesiveness and transparency, and to a multilayered preform which enables the position of the intermediate layer to be legible and assumes excellent transparency after it has been stretch-molded.

Background Art:

Polyester resins as represented by polyethylene terephthalates have excellent properties such as formability, transparency, mechanical strength and resistance against chemicals and have, therefore, been widely used in the field of packing containers. In order to improve gas-barrier property of the containers comprising the polyester resin against oxygen and the like gases, there have been proposed packing materials of a multilayered structure forming, as an intermediate layer, a layer of a saponified product of an ethylene-vinyl acetate copolymer or of a polyamide between the inner layer and the outer layer of a polyester resin. In order to further improve the gas-barrier property of the packing material of the above multilayered structure, it has, further, been attempted to blend the intermediate layer with clay (patent document 1).

In the packing material of this multilayered structure, if the polyamide resin is used as the intermediate layer, adhesiveness becomes poor between the polyamide resin and the polyester resin forming the inner and outer layers. So far, therefore, it was necessary to interpose the layers of an adhesive resin among the layers.

In order to solve the above problem, therefore, there has heretofore been proposed to use, as the intermediate layer, a resin composition of a blend of a polyester resin and a polyamide resin or a blend of a polyester resin and a clay-containing polyamide resin (patent documents 2 and 3).

However, when there is used, as the intermediate layer, a resin composition of a blend of the polyester resin and the polyamide resin and, specifically, an aromatic polyamide resin such as polymetaxyleneadipamide (MXD6) which has particularly excellent gas-barrier property among the polyamide resins, there occurs a problem in that excellent transparency possessed by the polyester resin is impaired.

As means for improving transparency of a blend of the polyester resin and the polyamide resin, the following patent document 4 discloses a transparent polymer blend which is a polymer composition containing an immiscible blend of a first component of a specific copolymerized polyester resin and a second component which is a specific amide-exchange blend, a difference in the refractive index between the first component and the second component being adjusted.

Prior Art Documents:

Patent Documents:

   Patent document 1: JP-A-2004-142444
   Patent document 2: JP-A-2005-59859
   Patent document 3: International Publication WO2010/035654
   Patent document 4: Japanese Patent No. 5296385

Outline of the Invention:

Problems that the Invention is to Solve:

The blend of the polyester resin and the polyamide resin whose refractive indices are adjusted to be in agreement described in the above patent document 4 may have improved transparency. Even if a preform of the above blend is biaxially stretch-blow-molded into a stretch-blow-molded container, however, it does not mean that excellent transparency is realized. Namely, if resins are stretched, their refractive indices vary depending on their crystallinities. After stretch-molded, therefore, the refractive indices of the resins do not necessarily come into agreement, and the container after it is stretch-molded does not maintain satisfactory transparency.

To maintain gas-barrier property of the container, further, it is necessary that an intermediate barrier layer is formed in at least a portion of the multilayered preform that turns into the body portion of the container after it is stretched at a high ratio. Here, if the position for forming the intermediate barrier layer could be visible, then the efficiency of inspection can be improved in the step of production.

It is, therefore, an object of the present invention to provide a stretch-blow-molded container of a multilayered structure that includes inner and outer layers of a polyester resin and an intermediate layer of a blend of a polyester resin and a gas-barrier aromatic polyamide resin, satisfying all of excellent transparency, gas-barrier property and interlayer adhesiveness.

Another object of the invention is to provide a multilayered preform of a multilayered structure that includes inner and outer layers of a polyester resin and an intermediate layer of a blend of a polyester resin and a gas-barrier aromatic polyamide resin, the preform enabling the position of the intermediate barrier layer to be visible, and capable of being stretch-blow-molded into a container that satisfies all of excellent transparency, gas-barrier property and interlayer adhesiveness.

Means for Solving the Problems:

According to the present invention, there is provided a multilayered stretch-blow-molded container obtained by biaxially stretch-blow-molding a multilayered preform that includes inner and outer layers of an ethylene terephthalate polyester resin, and at least one intermediate layer of a lowly crystallizable ethylene terephthalate polyester resin and a gas-barrier aromatic polyamide resin, wherein a difference of refractive index ($\Delta$RI) between the lowly crystallizable ethylene terephthalate polyester resin and the gas-barrier aromatic polyamide resin represented by the following formula (1),

$$\triangle RI = \left| RI_E - RI_A \right| \qquad (1)$$

wherein $RI_E$ and $RI_A$ are refractive indices of injection-molded plates made, respectively, from the lowly crystallizable ethylene terephthalate polyester resin and the aromatic polyamide resin after they have been biaxially stretched into 3 x 3 times simultaneously,
is not more than 0.03, and the haze in the body portion is not more than 3%.

In the multilayered stretch-blow-molded container of the present invention, it is desired that:

1. The lowly crystallizable ethylene terephthalate polyester resin contains 7.5 to 15 mol% of isophthalic acid in the dicarboxylic acid component;
2. The lowly crystallizable ethylene terephthalate polyester resin contains 15 to 30 mol% of cyclohexanedimethanol in the diol component;
3. The haze is not less than 5% in a portion where the preform is forming the multilayered structure;
4. The weight ratio of the intermediate layer is 1 to 25% by weight in the whole container; and
5. The intermediate layer contains at least either an oxygen-absorbing component comprising an oxidizing catalyst and an oxidizing organic component, or a layered silicate.

According to the present invention, further, there is provided a multilayered preform that includes inner and outer layers of an ethylene terephthalate polyester resin, and at least one intermediate layer of a lowly crystallizable ethylene terephthalate polyester resin and a gas-barrier aromatic polyamide resin, wherein the lowly crystallizable ethylene terephthalate polyester resin contains 7.5 to 15 mol% of isophthalic acid in the dicarboxylic acid component or 15 to 30 mol% of cyclohexanedimethanol in the diol component, and the haze is not less than 5% in a portion where the multilayered structure is formed.

In the multilayered preform of the present invention, it is desired that:

1. A difference of refractive index ($\Delta$RI) between the lowly crystallizable ethylene terephthalate polyester resin and the gas-barrier aromatic polyamide resin represented by the above formula (1) is not more than 0.03; and
2. No multilayered structure is formed in the mouth/neck portion of the preform.

Effects of the Invention:

In the multilayered stretch-blow-molded container of the present invention, as the polyester resin for forming the intermediate layer that serves as a matrix for being blended with the gas-barrier aromatic polyamide resin, there is selected a lowly crystallizable polyester resin which, after it is stretch-molded, assumes a refractive index close to that of the gas-barrier aromatic polyamide resin and of which the difference of refractive index as represented by the above formula lies within the above-mentioned range. This enables the container to possess excellent transparency with its haze in the body portion being not more than 3% yet maintaining excellent gas-barrier property.

By forming the inner and outer layers using the crystalline ethylene terephthalate polyester resin, further, it is allowed to evenly stretch the intermediate layer that is formed by using the lowly crystallizable polyester resin that has poor stretching property. Thus there is provided a multilayered stretch-blow-molded container having excellent mechanical strength.

Upon forming the intermediate layer using the polyester resin as a matrix resin, further, excellent interlayer adhesiveness is attained among the inner layer, the outer layer and the intermediate layer; i.e., interlayer peeling is prevented despite of receiving shocks due to falling or the like.

The refractive indices of the lowly crystallizable polyester resin and of the gas-barrier aromatic polyamide resin become close to each other upon stretching, into a predetermined number of times, the blend of the lowly crystallizable polyester resin and the gas-barrier aromatic polyamide resin, that is used for forming the intermediate layer of the multilayered stretch-blow-molded container and the multilayered preform. In the invention, however, before the step of stretch-blow-molding, the lowly crystallizable polyester resin and the gas-barrier aromatic polyamide resin have not been adjusted for their refractive indices. Before the step of stretch-blow-molding, therefore, there is a large difference in their refractive indices. As a result, the multilayered preform of before being stretch-blow-molded is opaque having a haze of not less than 5% in the portion where the intermediate layer is present. Therefore, the preform enables the position where there is formed the multilayered structure including the intermediate layer to be visible. It is, therefore, allowed to easily make sure if the gas-barrier resin is made present at the position that turns into the body potion that assumes the smallest thickness after the step of stretch-blow-molding and that must have the gas-barrier property, providing advantage in that the inspection is facilitated in the step of production.

Brief Description of the Drawings:

[Fig. 1] is a sectional view showing a multilayered preform of the present invention and part of it in cross section.

[Fig. 2] is a sectional view showing a multilayered stretch-blow-molded container of the present invention and part of it in cross section.

[Fig. 3] is a view showing another sectional structure of the multilayered preform and the multilayered stretch-blow-molded container of the present invention.

Modes for Carrying Out the Invention:

(Multilayered stretch-blow-molded container)

According to the present invention as described above, as the polyester resin and the gas-barrier aromatic polyamide resin for forming the intermediate layer, there are selectively used in combination a lowly crystallizable ethylene terephthalate polyester resin (hereinafter often referred to as "lowly crystallizable PET resin") and a gas-barrier aromatic polyamide resin (hereinafter often referred to as "barrier polyamide resin"), the difference of refractive index between them represented by the above-mentioned formula (1) being in a range of not more than 0.03 and, specifically, not more than 0.026. Namely, it was discovered that when a preform having the intermediate layer comprising the lowly crystallizable PET and the barrier polyamide resin is biaxially stretch-blow-molded, there is obtained a stretch-blow-molded container having a haze of not more than 3% in the body portion thereof and assuming excellent transparency.

The stretching condition represented by the above formula (1) is in agreement with the stretching condition at the time of biaxially stretch-blow-molding the preform into the multilayered stretch-blow-molded container. Examples appearing later are demonstrating that if the difference in the refractive index as measured from the samples prepared under the above stretching condition is within the above range, then the multilayered stretch-blow-molded container has a haze that is not more than 3%.

(Inner and outer layers)

The ethylene terephthalate polyester resin (hereinafter often referred to as "PET resin") used for forming the inner and outer layers of the present invention is a polyester resin of which not less than 50 mol% and, specifically, not less than 80 mol% of the dicarboxylic acid component is a terephthalic acid, and of which not less than 50 mol% and, specifically, not less than 80 mol% of the diol component is an ethylene glycol. The above PET resin have excellent mechanical and thermal properties as well as excellent stretching property enabling, therefore, the intermediate layer, too, to be uniformly stretched at the time of stretch-molding.

The PET resin may contain copolymerizable components other than the terephthalic acid and ethylene glycol.

As the carboxylic acid components other than the terephthalic acid, there can be exemplified isophthalic acid, naphthalenedicarboxylic acid, p-$\beta$-oxyethoxybenzoic acid, biphenyl-4,4'-dicarboylic acid, diphenoxyethane-4,4'-dicarboxylic acid, 5-sodiumsulfoisophthalic acid, hexahydroterephthalic acid, adipic acid and sebacic acid.

As the diol components other than the ethylene glycol, there can be exemplified 1,4-butanediol, propylene glycol, neopentyl glycol, 1,6-hexylene glycol, diethylene glycol, triethylene glycol, cyclohexanedimethanol, ethylene oxide adduct of bisphenol A, glycerol and trimethylolpropane.

Further, the dicarboxylic acid components and diol components may include trifunctional or more highly functional polybasic acids and polyhydric alcohols. For instance, there can be exemplified such polybasic acids as trimellitic acid, pyromellitic acid, hemimellitic acid, 1,1,2,2-ethanetetracarboxylic acid, 1,1,2-ethanetricarboxylic acid, 1,3,5-pentanetricarboxylic acid, 1,2,3,4-cyclopentanetetracarboxylic acid and biphenyl-3,4,3',4'-tetracarboxylic acid, and such polyhydric alcohols as pentaerythritol, glycerol, trimethylolpropane, 1,2,6-hexanetriol, sorbitol, and 1,1,4,4-tetrakis(hydroxymethyl) cyclohexane.

It is desired that the PET resin used for forming the inner and outer layers of the invention has an intrinsic viscosity in a range of 0.60 to 1.40 dL/g as measured by using a mixed solvent of phenol and tetrachloroethane at a weight ratio of 1:1 at temperature of 30°C. It is, further, desired that the PET resin has a melting point (Tm) of 200 to 275°C to improve heat resistance and workability of the multilayered containers. It is desired that it also has a glass transition point of not lower than 30°C and, specifically, in a range of 50 to 120°C.

The PET resin used for forming the inner and outer layers of the invention can be blended with blending agents for resins known per se. , such as coloring agent, antioxidant, stabilizer, antistatic agents, parting agent, lubricant and nucleating agent within ranges in which they do not impair the quality of the finally formed products according to known recipes.

(Intermediate layer)

The intermediate layer of the multilayered stretched polyester container of the present invention comprises at least a lowly crystallizable PET resin and a barrier polyamide resin. Here, an important feature is that a difference of refractive index between these resins represented by the above formula (1) is in a range that is not larger than 0.03.

In the invention, further, the lowly crystallizable PET resin and the barrier polyamide resin that constitute the intermediate layer are added at a weight ratio of 95: 5 to 50:50 and, specifically, at a weight ratio of 90:10 to 50:50 if interlayer adhesiveness is required. This makes it possible to form an islands-sea dispersion structure in which a plurality of barrier polyamide resin dispersion phases are present in a continuous phase of the lowly crystallizable PET resin. If the amount of the barrier polyamide resin is smaller than the above range, the gas-barrier property is not obtained as desired. If the amount of the barrier polyamide resin is larger than the above range, on the other hand, there is formed an islands-sea dispersion structure in which a plurality of lowly crystallizable PET resin dispersion phases are present in a continuous phase of the barrier polyamide resin. Therefore, interlayer adhesiveness may be impaired. In this case, however, the intermediate layer exhibits a particularly high degree of gas-barrier property since the continuous phase is comprised of the barrier polyamide resin. That is, let' s presume a case where the intermediate layer assumes the same weight ratio relative to the weight of the container or the whole container. In this case, a multilayered stretch-blow-molded container having the intermediate layer of a blend of the lowly crystallizable polyester and the barrier polyamide at a ratio of 40:60 (Example 15) has a carbonic acid gas-barrier property that is comparable to that of the multilayered stretch-blow-molded container that has the intermediate layer which comprises the barrier polyamide alone. Thus it is made possible to maintain the gas-barrier property despite of using the gas-barrier resin in a decreased amount. Therefore, it becomes allowable decrease the amount of the expensive gas-barrier resin and to decrease the amount of the gas-barrier resin that is fed into a system for recycling the PET bottles. In this case, it is desired that the intermediate layer is constituted by using the lowly crystallizable PET resin and the barrier polyamide resin at a weight ratio of 5: 95 to 50:50 and, specifically, 10:90 to 50:50.

[Lowly crystallizable PET resin]

The lowly crystallizable PET resin that constitutes the intermediate layer of the present invention ensures adhesiveness to the PET resin that constitutes the inner and outer layers, improves interlayer adhesiveness, has a refractive index in a range of 1. 56 to 1. 58 before it is stretched, has a refractive index in a range of 1.58 to 1.62 after it is stretched under the condition of the above-mentioned formula (1), i.e., has a refractive index close to that of a barrier polyamide resin after it is stretched as will be described later and, therefore, does not impair the transparency of the stretch-blow-molded container.

That is, the PET resin that is, usually, used for the stretch-blow-molded containers is a crystalline polyester resin that imparts mechanical strength and heat resistance to the containers. If stretched, however, the crystalline polyester resin is oriented and is crystallized to an increased degree. Therefore, its refractive index changes a lot depending on the stretching. If used in combination with the barrier polyamide resin, therefore, a difference increases between their refractive indices causing a decrease in the transparency. Among the PET resins, therefore, the present invention uses a lowly crystallizable PET resin that causes a little increase in the refractive index when it is stretched.

In the specification, the words "lowly crystallizable" PET resin stand for the one which, when heated at a rate of 10°C /min. in the differential scanning calorimetry (DSC), exhibits no peak in the crystal fusion or, if it exhibits a peak in the crystal fusion, has a quantity of heat of crystal fusion ($\Delta$ Hm) of not more than 40 J/g that corresponds to the peak in the crystal fusion.

As the lowly crystallizable PET resin, there can be, desirably, used a PET resin comprising 7.5 to 15 mol% of isophtalic acid and the remainder of terephthalic acid per 100 mol% of the whole carboxylic acid components, or a PET resin comprising 15 to 30 mol% of 1,4-cyclohexanedimethanol and the remainder of ethylene glycol per 100 mol% of the whole diol components.

Further, the lowly crystallizable PET resin may comprise the terephthalic acid and the ethylene glycol in amounts of not less than 50 mol%, respectively, or either one of the above components in an amount in the above range and the rest of copolymerizable components other than those described above.

As the carboxylic acid components other than the terephthalic acid, there can be exemplified isophthalic acid, naphthalenedicarboxylic acid, p-$\beta$-oxyethoxybenzoic acid, biphenyl-4,4'-dicarboxylic acid, diphenoxyethane-4,4'-dicarboxylic acid, 5-sodiumsulfoisophthalic acid, hexahydroterephthalic acid, adipic acid and sebacic acid.

As the diol components other than the ethylene glycol, there can be exemplified 1,4-butanediol, propylene glycol, neopentyl glycol, 1,6-hexylene glycol, diethylene glycol, triethylene glycol, cyclohexanedimethanol, ethylene oxide adduct of bisphenol A, glycerol and trimethylolpropane.

The above dicarboxylic acid components and diol components may include trifunctional or more highly functional polybasic acids and polyhydric alcohols. Their examples include polybasic acids such as trimellitic acid, pyromellitic acid, hemimellitic aid, 1,1,2,2-ethanetetracarboxylic acid, 1,1,2-ethanetricarboxylic acid, 1,3,5-pentanetricarboxylic acid 1,2,3,4-cyclopentanetetracarboxylic acid and biphenyl-3,4,3',4'-tetracarboxylic acid, as well as polyhydric alcohols such as pentaerythritol, glycerol, trimethylolpropane, 1,2,6-hexanetriol, sorbitol and 1,1,4,4-tetrakis(hydroxymethyl)cyclohexane.

It is desired that the lowly crystallizable PET resin used for the intermediate layer of the present invention has an intrinsic viscosity in a range of 0.60 to 1.40 dL/g as measured by using a mixed solvent of phenol and tetrachloroethane at a weight ratio of 1:1 at a temperature of 30°C.

[Gas-barrier aromatic polyamide resin]

The gas-barrier aromatic polyamide resin that constitutes the intermediate layer of the present invention has excellent gas-barrier property, has a refractive index in a range of 1.57 to 1.59 before it is stretched, has a refractive index in a range of 1.57 to 1.60 after it is stretched under the condition of the above-mentioned formula (1), and has a difference of refractive index represented by the above-mentioned formula (1) in a range of not larger than 0.03 when it is used in combination with the lowly crystallizable PET resin described above.

As the aromatic polyamide resin having the above-mentioned excellent gas-barrier property, there is, desirably, used a xylene group-containing polyamide and, specifically, a polyamide obtained from a diamine component that chiefly comprises an m-xylenediamine and/or a p-xylenediamine and from an aliphatic dicarboxylic acid and/or an aromatic dicarboxylic acid.

Concretely, there can be exemplified homopolymers such as polymetaxyleneadipamide, polymetaxylylenesebacamide, polymetaxylenesuberamide, polyparaxylenepimelamide and polymetaxyleneazelamide; copolymers such as metaxylene/paraxyleneadipamide copolymer, metaxylene/paraxylenepimelamide copolymer, metaxylene/paraxylenesebacamide copolymer and metaxylene/paraxyleneazelamide copolymer; or copolymers obtained by copolymerizing a homopolymer or a copolymer component thereof with an aliphatic diamine such as hexamethylenediamine, an alicyclic diamine such as piperadine, an aromatic diamine such as para-bis (2-aminoethyl)benzene, an aromatic dicarboxylic acid such as terephthalic acid, a lactam such as $\epsilon$ -caprolactam, an $\omega$-aminocarboxylic acid such as 7-aminoheptanoic acid or aromatic aminocarboxylic acid such as para-aminomethylbenzoic acid.

These aromatic polyamide resins, too, should have molecular weights large enough for forming film, and should have a relative viscosity of not less than 1.1 and, specifically, not less than 1.5 as measured in concentrated sulfuric acid (concentration of 1.0 g/dl) at 30°C.

Further, if an oxygen-absorbing component that will be described later is to be added, it is desired to use a polyamide resin that is obtained by the polycondensation of a dicarboxylic acid component with a diamine component comprising chiefly a xylenediamine having a terminal amino group concentration of not less than 40 eq/10[6] g since there takes place no deterioration by oxidation when oxygen is absorbed.

[Other components]

In the stretch-blow-molded container of the present invention, it is desired that the intermediate layer contains at least either an oxygen-absorbing component comprising an oxidizing catalyst and an oxidizing organic component, or a layered silicate.

The oxygen-absorbing component comprises a combination of a conventional oxidizing catalyst and an oxidizing organic component. Upon being blended with it, the intermediate layer becomes capable of shutting off or trapping oxygen that permeates into the container from the exterior thereof, or capable of trapping oxygen remaining in the container, and capable of improving preservability of the contents.

As the oxidizing organic component, there can be exemplified organic matters that can be oxidized or, concretely, butadiene, polyene oligomers or polymers modified with acid or acid anhydride, such as maleic anhydride-modified butadiene, as well as low molecular compounds having unsaturated bonds.

As the oxidizing catalyst, there can be used metal components of the Group VIII of periodic table, such as iron, cobalt, nickel and the like though not limited thereto only.

The oxidizing organic component is added in an amount of, desirably, 2 to 10 parts by weight per 100 parts by weight of the barrier polyamide resin while the oxidizing catalyst is added in an amount of, desirably, at least 300 ppm calculated as metal.

If there is used, as the barrier polyamide resin, a polyamide resin obtained by the polycondensation reaction of a dicarboxylic acid component with a diamine component that chiefly comprises a xylylenediamine having a terminal amino group concentration of lower than 40 eq/$10^6$ g, then only the oxidizing catalyst may be added thereto; i.e., the obtained barrier polyamide resin by itself exhibits barrier property as well as oxygen-absorbing property.

The intermediate layer blended with the layered silicate exhibits further improved gas-barrier property due to the detouring effect of the layered silicate.

As the layered silicate, there can be exemplified mica, vermiculite and smectite. Preferred layered silicates are those of the 2-octaheral type or the 3-octahedral type having electric charge densities of 0. 25 to 0. 6. As 2-octahedral type ones, there can be exemplified montmorillonite, beidellite and nontronite. As the 3-octahedral type ones, there can be exemplified hectorite and saponite. The layered silicate is preferably the one that is swollen by being treated with an organificating agent such as quaternary ammonium salt. As the quaternary ammonium salt, there can be used a quaternary ammonium salt having at least one or more alkyl groups with not less than 12 carbon atoms or, concretely, trimethyldodecyl ammonium salt or trimethyltetradecyl ammonium salt.

The layered silicate is added in an amount of, desirably, 1 to 10 parts by weight and, specifically, 1 to 8 parts by weight per 100 parts by weight of the barrier polyamide resin.

The above oxygen-absorbing component and/or the layered silicate may be added to either the lowly crystallizable PET resin or the barrier polyamide resin, but are, particularly preferably, added to the barrier polyamide resin. That is, if the lowly crystallizable PET resin that serves as the matrix of the intermediate layer contains the oxygen-absorbing component and/or the layered silicate, then the formability becomes poor and interlayer peeling may take place. Therefore, these components are made present in the dispersion phase that comprises the barrier polyamide resin in order to suppress a decrease in the formability and in the interlayer adhesive force.

The lowly crystallizable PET resin or the barrier polyamide resin that constitutes the intermediate layer can be blended with known blending agents for resins, such as deoxidizing agent, filler, coloring agent, heat stabilizer, aging stabilizer, antioxidant, anti-aging agent, photo stabilizer, ultraviolet ray absorber, antistatic agent, lubricant like metal soap or wax, and resin or rubber for reforming according to known recipe within ranges in which they do not impair the object of the invention.

If the above-mentioned components are added to the lowly crystallizable PET resin or the barrier polyamide resin that constitutes the intermediate layer, it is desired that the amounts of the components that are added are smaller than the amount of the lowly crystallizable PET resin or the aromatic polyamide resin that serves as the base material so that the refractive index is affected little. In this case, a difference of the refractive index represented by the above formula (1) may be measured from a plate obtained by injection-molding the lowly crystallizable PET resin or the aromatic polyamide resin that serves as the base material after it has been biaxially stretched into 3 x 3 times simultaneously.

(Multilayered structure)

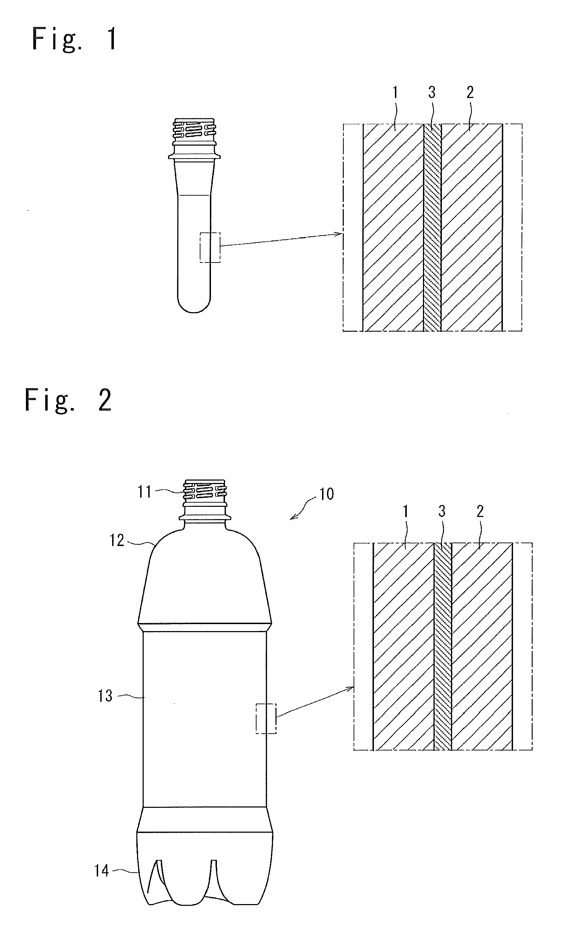

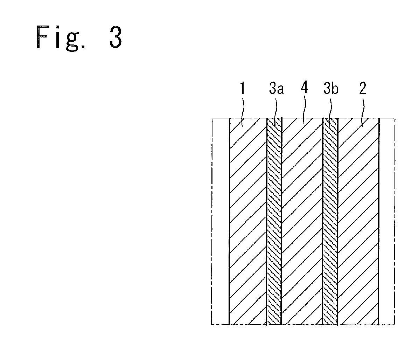

The multilayered stretch-blow-molded container and the multilayered preform of the present invention can employ various kinds of layer constitutions so far as they have the inner and outer layers of the PET resin, and at least one intermediate layer comprising the above-mentioned lowly crystallizable PET resin and the barrier polyamide resin. As shown in Figs. 1 and 2, they can assume the two-material -three-layer constitution including a barrier intermediate layer 3 comprising the lowly crystallizable PET resin and the barrier polyamide resin between the inner layer 1 and the outer layer 2 of the PET resin. Or as shown in Fig. 3, they can also assume the two-material -five-layer constitution including the inner layer 1 and the outer layer 2 of the PET resin, and two barrier intermediate layers 3a and 3b comprising the lowly crystallizable PET resin and the barrier polyamide resin between the inner layer 1 of the PET resin and the intermediate layer 4 of the PET resin and between the outer layer 2 of the PET resin and the intermediate layer 4 of the PET resin.

In the present invention, the interlayer adhesiveness has been improved among the inner layer, outer layer and intermediate layer. In producing the multilayered containers, therefore, there is no need of interposing the adhesive resin among the resin layers. The adhesive resin, however, may be interposed among the resin layers, as a matter of course. As the adhesive resin, there can be used a thermoplastic resin that has, on a main chain or side chains thereof, a carbonyl (-CO-) group due to carboxylic acid, carboxylic anhydride, carboxylate, carboxylic acid amide or carboxylic acid ester at a concentration of 1 to 700 milliequivalent (meq)/100 g of the resin and, specifically, 10 to 500 meq/100 g of the resin. Preferred examples of the adhesive resin include ethylene-acrylic acid copolymer, ionically crosslinked olefin copolymer, maleic anhydride-grafted polyethylene, maleic anhydride-grafted polypropylene, acrylic acid-grafted polyolefin, ethylene-vinyl acetate copolymer and copolymerized polyester.

It is, further, desired that the weight ratio of the intermediate layer is in a range of 1 to 25% by weight and, specifically, 3 to 25% by weight in the whole container. If the weight ratio of the intermediate layer is smaller than the above range, the gas-barrier property cannot be obtained to a sufficient degree. If the weight ratio of the intermediate layer is larger than the above range, on the other hand, it becomes disadvantageous in economy and, besides, it may become difficult to maintain mechanical strength and the like of the containers.

As described above, further, if there are made present a plurality of intermediate layers comprising the lowly crystallizable PET resin and the barrier polyamide resin, it is desired that the weight ratio of the intermediate layers as a whole lies within the above-mentioned range.

(Multilayered preform)

In the multilayered preform of the present invention as described above, the intermediate layer comprises a barrier polyamide resin and a lowly crystallizable PET resin which is a PET that contains 7.5 to 15 mol% of an isophthalic acid or a PET that contains 15 to 30 mol% of a cyclohexanedimethanol. The preform has a haze of not more than 5% in a portion where the multilayered structure is formed and permits the barrier intermediate layer to be legible.

Further, the difference of refractive index ($\Delta$RI) between the lowly crystallizable PET resin and the barrier polyamide resin represented by the above formula (1) is in a range of not more than 0.03 and, specifically, not more than 0.026. Therefore, the multilayered stretch-blow-molded container possesses excellent transparency after it has been stretched.

(Method of production)

The multilayered stretch-blow-molded container of the present invention can be produced by a conventional method of production. Namely, the above-mentioned preform having a multilayered structure is formed and is biaxially stretch-blow-molded into the container.

Fig. 1 is a view illustrating a multilayered preform of the invention in which a barrier intermediate layer 3 comprising a lowly crystallizable PET resin and a barrier polyamide resin is formed between an inner layer 1 and an outer layer 2 of a PET resin.

Fig. 2 is a view illustrating a multilayered stretch-blow-molded container of the present invention. The multilayered stretch-blow-molded container generally designated at 10 includes a mouth/neck portion 11, a shoulder portion 12, a body portion 13 and a bottom portion 14 which is of a petaloidal shape to meet the pressure resistance of the container.

In the invention, if the intermediate layer is to be blended with the oxygen-absorbing component or the layered silicate, it is desired, as described above, that these components are added to the barrier polyamide resin to prepare a master batch in a pelletized form. Namely, it is desired to blend the master batch and the lowly crystallizable PET resin together such that the amount of the lowly crystallizable PET resin and the amount of the barrier polyamide resin are at the above-mentioned ratio to prepare a resin composition for forming the intermediate layer.

The multilayered preform can be produced by any one of the molding methods known per se. such as a co-extrusion molding method in which a resin composition for intermediate layer comprising, for example, a lowly crystallizable PET resin and a barrier polyamide resin is co-extruded together with a PET resin for forming the inner and outer layers; a simultaneous injection-molding method in which a resin composition for intermediate layer and a PET resin are simultaneously injected into a mold; a sequential injection method in which a PE resin, a resin composition for intermediate layer and a PET resin are sequentially injected into a mold; or a compression molding method in which a co-extruded product of a resin composition for intermediate layer and a PET resin is compression-molded by using a core mold and a cavity mold.

In the multilayered preform used in the present invention, it is important that a multilayered structure is formed in at least a portion that becomes the body portion that assumes the smallest thickness after the stretching. This makes it possible to impart the required gas-barrier property to the container and to maintain transparency of the container. Namely, with the intermediate layer of the invention having been stretched, the lowly crystallizable PET resin and the barrier polyamide resin assume refractive indices that become close to each other and, therefore, become transparent. It is, therefore, desired that the multilayered structure is formed in the preform in only the portion that is to be fully stretched from the standpoint of maintaining transparency of the container as a whole.

In the heat-resistant container having the mouth/neck portion that is thermally crystalized, it does not matter if the mouth/neck portion is transparent or not. Namely, the mouth/neck portion of the preform that becomes the mouth/neck portion of the container is not stretched. It is, therefore, desired that no multilayered structure is formed in the mouth/neck portion of the preform.

In the preform of before being stretched, the portion where the multilayered structure has been formed has a haze of not less than 5% and is less transparent than the portion that comprises the PET resin only. Therefore, it is easy to make sure if the multilayered structure has been formed in the preform.

It is desired that molding the multilayered preform and the biaxial stretch-blow molding are conducted by a cold parison system. They, however, can also be conducted by a hot parison system that executes the stretch-blow molding without thoroughly cooling the multilayered preform that is molded.

Prior to conducting the biaxial stretch-blow molding, further, the preform is heated at a stretching temperature of 90 to 120°C by such means as hot air, infrared-ray heater or high-frequency induction heating.

The heated preform is fed into a known stretch-blow-molding machine, set in a mold, pulled and stretched in the axial direction by pushing a stretching rod therein, and is stretched in the circumferential direction by blowing a fluid therein.

It is desired that the multilayered stretch-blow-molded container which is the final product of the invention is stretched at an area ratio of 2. 0 to 4.0 times and, specifically, 2.5 to 3.5 times, or at a ratio in the axial direction of 2.0 to 4.0 times and, specifically, 2.5 to 3.5 times and in the circumferential direction of 2.0 to 4.0 times and, specifically, 2.5 to 3.5 times from such a standpoint that the difference in the refractive index between the lowly crystallizable PET resin and the barrier polyamide resin that constitute the intermediate layer is in a range of not more than 0.03 after having been stretched. This enables the refractive indices of the lowly crystallized PET resin and the barrier polyamide resin to become close to each other in the intermediate layer after it has been stretched and, therefore, the value ΔRI to lie within the above-mentioned range making it, therefore, possible to obtain a stretch-blow-molded container having such excellent transparency as a haze of not more than 3% in the body portion.

In the multilayered stretch-blow-molded container of the invention, the thickness in the body portion varies depending on the volume (weight) of the container or the use of the container but is, desirably, as small less than 0.36 mm and, specifically, in a range of 0.20 to 0.30 mm. The thickness of the body portion specified in the invention is a value measured at the thinnest portion of the body portion of the container.

EXAMPLES

1. Materials.

Described below are materials used in Examples.

(1) Ethylene terephthalate polyester resin.
PET1: Isophthalic acid (copolymerization ratio = 1.8 mol%), diethylene glycol (copolymerization ratio = 2.3 mol%) copolymerized polyethylene terephthalate resin (5015w: manufactured by Shinkogosen Co., IV = 0.83).
(2) Lowly crystallizable ethylene terephthalate polyester resin.

APET1: Isophthalic acid (copolymerization ratio = 15 mol%), diethylene glycol (copolymerization ratio = 3.6 mol%) copolymerized polyethylene terephthalate resin (IV = 0.70).
APET2: Cyclohexanedimethanol (copolymerization ratio = 30 mol%), diethylene glycol (copolymerization ratio = 2.3 mol%) copolymerized polyethylene terephthalate resin (S2008: manufactured by SK Chemical Co., IV = 0.78).

(3) Aromatic polyamide.

PA1: Polymetaxyleneadipamide resin (S6007: manufactured by Mitsubishi Gas Kagaku Co.).
PA2: Polymetaxyleneadipamide resin (T620: manufactured by Toyobo Co.)

(4) Transition metal catalyst.

Oxidizing catalyst 1: Cobalt neodecanoate (DICNATE 5000: manufactured by Dainihon Ink Kagaku Co.)
(5) Oxidizing organic components.

Oxidizing organic component 1: Maleic acid-modified
polybutadiene (Ricon 144MA3: manufactured by Sartomer Co.)

(6) Layered silicate component.
Layered silicate component 1: Organically treated clay (organically treated montmorillonite)

2. Preparation of master batch resin pellets.

By using a biaxial extruder with granulation equipment (TEM26SS: manufactured by Toshiba Kikai Co.), a stranded extrusion product obtained by mixing and kneading the base resin and various constituent components together was cooled as it was conveyed by a conveyer, and was granulated by a pelletizer to obtain a pelletized master batch resin.
As for introducing the constituent components, the liquid components were added to cover the pellets of the base resin or were added by using a liquid feeder. The powdery components were added by using a powder feeder through an opening in the extruder.

3. Molding the multilayered preform.

By using a co-injection molding machine, there was molded a multilayered preform of a two-material-three-layer constitution (PET/intermediate layer/PET). To a hopper of the injection-molding machine for forming the inner and outer PET layers, there was thrown the ethylene terephthalate type resin that has been dried and to a hopper of the injection-molding machine for forming the intermediate layer, there were thrown the lowly crystallizable ethylene terephthalate type resin and the aromatic polyamide type gas-barrier resin that have been dried and, depending on the cases, a dry blend thereof further blended with the above-mentioned pelletized master batch resin at a predetermined ratio, and these materials were co-injection molded. The inner and outer PET layers were set at a temperature of 290°C while the intermediate layer was molded at a temperature of 260 to 280°C. The preform weighing 24 g was molded in a shape as shown in Fig. 1 in a manner that the intermediate layer reached neither the mouth/neck portion nor the bottom portion.

4. Molding the multilayered bottle.

The body portion of the multilayered preform was heated at a surface temperature of 100°C from the outer side by using an infrared-ray heater, was mechanically stretched in the axial direction of the bottle by using a stretch rod, and was then biaxially stretched and blown by blowing the air therein to thereby form a stretch-blown bottle of a capacity of 500 ml shown in Fig. 2, the body portion of which being stretched roughly by 3 times longitudinally, 3 times transversely and, therefore, 9 times in area. The mold temperature was set at 60°C, and the air of room temperature (20°C) was blown maintaining an elevated pressure of 3.5 MPa.

5. Molding the injection-molded plate.

The above-mentioned materials that have been dried were fed alone or being dry-blended at a predetermined ratio into the hopper of an injection-molding machine (NN75JS: manufactured by Niigata Tekkojo Co.). By setting the temperature of the barrel at 260 to 280°C, the materials were injection-molded into a plate of a size of 90 x 90 x 1.5 mm.

6. Forming the biaxially stretched sheet.

By using a biaxially stretching testing machine (x6H-S: manufactured by Toyo Seiki Seisakusho Co.), the above injection-molded plate was biaxially stretched under the following conditions.

Temperature in the chamber: 100°C
Heating time prior to stretching: 2 minutes and 30 seconds
Stretching method: simultaneous biaxial stretching
Stretching ratios: 3 times longitudinally, 3 times transversely
Rate of stretching: 10 m/min. in both directions

7. Measurements.

(1) Measuring the haze in the body portion of the bottle.

The body portion of the multilayered bottle was cut out and was measured for its haze by using a color computer (SM-4: manufactured by Suga Shikenki Co.). The measured value was an average value from three arbitrary points.

(2) Measuring the haze in the body portion of the preform.

A cylindrical sample 30 mm in height was cut out from the center of the body portion of the multilayered preform, and was cut into two in the direction of height of the preform to obtain semicircular cylindrical samples. By using a spectrophotometer with an integrating sphere equipment (UV-3100PC: manufactured by Shimazu Seisakusho Co.), the samples were measured for their hazes according to the procedure described below. The scanning conditions were in the mode of measuring the transmission factors covering a range of 400 to 700 nm.

<1> Standard white plates were fitted to both the sample side and the reference side, and were scanned along the base lines. Thereafter, measurement was taken to calculate an integrated value of transmission factors ($T_0$) over 400 to 700 nm.
<2> The standard white plate was removed from the sample side, and spectra of light scattered by the equipment were measured to calculate an integrated value of transmission factors ($T_1$) over 400 to 700 nm.
<3> The sample preform was fitted to the sample side. Here, the outer surface side of the semicircular preform was closely contacted to the integrating sphere so that the incident light fell from the inner surface side of the preform. In this state, the spectra of light scattered by the equipment were measured to calculate an integrated value of transmission factors ($T_d$) over 400 to 700 nm.
<4> In the state of <3>, the standard white plate was fitted to the sample side, and the whole spectra of light transmitting through the sample were measured to calculate an integrated value of transmission factors ($T_t$) over 400 to 700 nm.

From the integrated values of transmission factors obtained above, the haze of the preform was calculated according to the following formula,

$$\text{Haze (\%) of preform} = \{T_d - T_t \times (T_1/T_0)\}/T_t \times 100$$

The measured value was an average of values measured from the two semicircular samples obtained from each sample.

(3) Measuring the oxygen-barrier property of the bottle.

Oxygen-free water having almost zero oxygen concentration was obtained by using an oxygen-free water production apparatus (LOW DISSOLVED OXYGEN: manufactured by Miura Kogyo Co.). A bottle was fully filled with this water and was sealed with a plastic cap. After stored for 4 weeks in an air-conditioned chamber maintained at 22°C50%RH, the concentration of oxygen dissolved in water in the bottle was measured by using an instrument for measuring the concentration of oxygen dissolved in water (Oxygen Indicator: manufactured by Orbisphere Laboratories Co.).

(4) Measuring the carbonic acid gas-barrier property of the bottle.

By taking the volume of the bottle into account, the dry ice was put in a required amount into the bottle so that the initial internal pressure was 0.4 MPa. The bottle was then sealed with a plastic cap. After stored for 4 weeks in the air-conditioned chamber maintained at 22°C50%RH, the central part of the body portion of the bottle was measured for its double-peak area stemming from $CO_2$ and appearing near 4990 cm$^{-1}$ by using an FT-IR (FTS7000 SERIES: manufactured by VARIAN Co.) and for its diameter of the body portion using Vernier calipers. A gas loss ratio was calculated according to the following formula,

$$A_1 = S_1 \times (D_0/D_1)$$

**EP 3 098 056 A1**

$$\text{Gas loss ratio (\%)} = (A_1 - A_0)/A_0 \times 100$$

$A_0$: initial peak area
$S_1$: peak area in a sequence period
$A_1$: Peak area in a sequence period (after the body diameter was corrected)
$D_0$: initial body diameter
$D_1$: body diameter in a sequence period

(5) Measuring the refractive index after biaxially stretched into 3 x 3 times simultaneously.

From the biaxially stretched sheet formed as described above, a sample of a size of 30 x 10 mm was cut out such that the direction of short side was the direction of measurement. By using the Abbes' refractometer having an eyepiece with a polarizer plate (NAR-1T: manufactured by Atago Co.), the sample was measured for its refractive indices in the directions of longitudinal and transverse stretches, and an average value thereof was regarded to be a value measured from the sample.

(6) Interlayer peeling test.

By using a cutter knife, the body portion of the bottle was incised over 30 mm to evaluate the appearance. From the incised portion, it was confirmed with the eye if the interlayer peeling was taking place.

(Example 1)

By using a co-injection molding machine, there was formed a multilayered preform of a two-material-three-layer constitution (PET/intermediate layer/PET). To a hopper of the injection-molding machine for forming the inner and outer PET layers, there was thrown the dried PET1 and to a hopper of the injection-molding machine for forming the intermediate layer, there were thrown the APET1 and PA1 that have been dried being blended at a weight ratio of 70:30, and these materials were co-injection molded. The inner and outer PET layers were set at a temperature of 290°C while the intermediate layer was molded at a temperature of 260°C. The preform weighed 24 g and the ratio of the intermediate layer was 6% by weight of the whole bottle. The preform was so molded that the intermediate layer reached neither the mouth/neck portion nor the bottom portion.
Next, the multilayered preform was biaxially stretch-blow molded into the multilayered bottle by the above-mentioned method. The obtained preform and the bottle were measured for their haze in the body portion of the preform, haze in the body portion of the bottle, carbonic acid gas-barrier property of the bottle and interlayer peeling by the methods described above.
Further, the dried APET1 was fed into the hopper of the injection-molding machine and was injection-molded while setting the temperature of the barrel at 280°C to obtain an injection-molded plate of a size of 90 x 90 x 1.5 mm. The injection-molded plate was biaxially stretched into 3 x 3 times simultaneously by the method described above to obtain a biaxially stretched sheet. The PA1, too, was similarly injection-molded into a plate and was biaxially stretched into a sheet. Here, however, the temperature of the barrel was set at 260°C. The stretched sheets were measured for their refractive indices by the method described above to calculate their refractive indices and a difference ΔRI of the refractive index.

(Example 2)

A preform and a bottle were molded and measured in the same manner as in Example 1 but throwing, into the hopper of the injection-molding machine for forming the intermediate layer, a dry blend of APET1, PET1 and PA1 at a weight ratio of 52.5:17.5:30 and forming the intermediate layer at a temperature of 280°C.
Further, a biaxially-stretched sheet was prepared and measured in the same manner as in Example 1 but feeding a dry blend of APET1 and PET1 at a weight ratio of 3: 1 into the hopper of the injection-molding machine.

(Example 3)

A preform and a bottle were molded and measured in the same manner as in Example 1 but throwing, into the hopper of the injection-molding machine for forming the intermediate layer, a dry blend of APET1, PET1 and PA1 at a weight ratio of 35:35:30 and forming the intermediate layer at a temperature of 280°C.

13

Further, a biaxially-stretched sheet was prepared and measured in the same manner as in Example 1 but feeding a dry blend of APET1 and PET1 at a weight ratio of 1: 1 into the hopper of the injection-molding machine.

(Example 4)

A preform and a bottle were molded and measured in the same manner as in Example 1 but throwing, into the hopper of the injection-molding machine for forming the intermediate layer, a dry blend of APET 2 and PA1 at a weight ratio of 70:30 and forming the intermediate layer at a temperature of 280°C.

Further, a biaxially-stretched sheet was prepared and measured in the same manner as in Example 1 but feeding APET2 into the hopper of the injection-molding machine.

(Example 5)

A preform, a bottle and a biaxially stretched sheet were formed and measured in the same manner as in Example 1 but throwing, into the hopper of the injection-molding machine for forming the intermediate layer, a dry blend of APET1 and PA1 at a weight ratio of 60:40.

(Example 6)

A preform, a bottle and a biaxially stretched sheet were formed and measured in the same manner as in Example 1 but throwing, into the hopper of the injection-molding machine for forming the intermediate layer, a dry blend of APET1 and PA1 at a weight ratio of 50:50.

(Example 7)

By using APET1 as the base material, there was prepared, by the above method, a pelletized master batch resin (MB1) containing the oxidizing catalyst 1 in an amount of 500 ppm calculated as metal in the resin composition. Here, the temperature of the barrel was maintained at 280°C.

By using the co-injection molding machine, there was molded a multilayered preform of a two-material-three-layer constitution (PET/intermediate layer/PET). To the hopper of the injection-molding machine for forming the inner and outer PET layers, there was thrown the dried PET1 and to the hopper of the injection-molding machine for forming the intermediate layer, there were thrown the MB1, APET1 and PA1 that have been dried being blended at a weight ratio of 70:25:5, and these materials were co-injection molded. The inner and outer PET layers were set at a temperature of 290°C while the intermediate layer was molded at a temperature of 260°C. The preform weighed 24 g and the ratio of the intermediate layer was 6% by weight of the whole bottle. The preform was so molded that the intermediate layer reached neither the mouth/neck portion nor the bottom portion.

Next, the multilayered preform was biaxially stretch-blow-molded into a multilayered bottle by the above-mentioned method. The obtained preform and the bottle were measured for their haze in the body portion of the preform, haze in the body portion of the bottle, oxygen-barrier property of the bottle and interlayer peeling by the methods described above.

Further, the dried APET1 was fed into the hopper of the injection-molding machine and was injection-molded while setting the temperature of the barrel at 280°C to obtain an injection-molded plate of a size of 90 x 90 x 1.5 mm. The injection-molded plate was biaxially stretched into 3 x 3 times simultaneously by the method described above to obtain a biaxially stretched sheet. The PA1, too, was similarly injection-molded into a plate and was biaxially stretched into a sheet. Here, however, the temperature of the barrel was set at 260°C. The stretched sheets were measured for their refractive indices by the method described above to calculate their refractive indices and a difference ΔRI of the refractive index.

(Example 8)

A preform, a bottle and a biaxially stretched sheet were formed and measured in the same manner as in Example 7 but throwing, into the hopper of the injection-molding machine for forming the intermediate layer, a dry blend of MB1, APET1 and PA1 at a weight ratio of 70:20:10.

(Example 9)

A preform, a bottle and a biaxially stretched sheet were formed and measured in the same manner as in Example 7 but throwing, into the hopper of the injection-molding machine for forming the intermediate layer, a dry blend of MB1, APET1 and PA1 at a weight ratio of 70:10:20.

(Example 10)

A preform, a bottle and a biaxially stretched sheet were formed and measured in the same manner as in Example 7 but throwing, into the hopper of the injection-molding machine for forming the intermediate layer, a dry blend of MB1 and PA1 at a weight ratio of 70:30.

(Example 11)

A preform, a bottle and a biaxially stretched sheet were formed and measured in the same manner as in Example 1 but changing the ratio of the intermediate layer in the bottle into 3% by weight.

(Example 12)

A preform, a bottle and a biaxially stretched sheet were formed and measured in the same manner as in Example 1 but changing the ratio of the intermediate layer in the bottle into 10% by weight.

(Example 13)

A preform, a bottle and a biaxially stretched sheet were formed and measured in the same manner as in Example 7 but throwing, into the hopper of the injection-molding machine for forming the intermediate layer, a dry blend of MB1, APET1 and PA1 at a weight ratio of 70:20:10, and changing the ratio of the intermediate layer in the bottle into 25% by weight.

(Example 14)

By using PA 2 as the base material, there was prepared, by the above method, a pelletized master batch resin (MB2) containing the oxidizing organic component 1 in an amount of 3% by weight and the oxidizing catalyst 1 in an amount of 350 ppm calculated as metal in the resin composition. Here, the temperature of the barrel was 260°C.
By using the co-injection molding machine, there was molded a multilayered preform of a two-material-three-layer constitution (PET/intermediate layer/PET). To the hopper of the injection-molding machine for forming the inner and outer PET layers, there was thrown the dried PET1 and to the hopper of the injection-molding machine for forming the intermediate layer, there were thrown the APET1 and MB2 that have been dried being blended at a weight ratio of 70:30, and these materials were co-injection molded. The inner and outer PET layers were set at a temperature of 290°C while the intermediate layer was molded at a temperature of 260°C. The preform weighed 24 g and the ratio of the intermediate layer was 6% by weight of the whole bottle. The preform was so molded that the intermediate layer reached neither the mouth/neck portion nor the bottom portion.
Next, the multilayered preform was biaxially stretch-blow-molded into a multilayered bottle by the above-mentioned method. The obtained preform and the bottle were measured for their haze in the body portion of the preform, haze in the body portion of the bottle, oxygen-barrier property of the bottle and interlayer peeling by the methods described above.
Further, the dried APET1 was fed into the hopper of the injection-molding machine and was injection-molded while setting the temperature of the barrel at 280°C to obtain an injection-molded plate of a size of 90 x 90 x 1.5 mm. The injection-molded plate was biaxially stretched into 3 x 3 times simultaneously by the method described above to obtain a biaxially stretched sheet. The PA 2, too, was similarly injection-molded into a plate and was biaxially stretched into a sheet. Here, however, the temperature of the barrel was set at 260°C. The stretched sheets were measured for their refractive indices by the method described above to calculate their refractive indices and a difference ΔRI of the refractive index.

(Example 15)

A preform, a bottle and a biaxially stretched sheet were formed and measured in the same manner as in Example 1 but throwing, into the hopper of the injection-molding machine for forming the intermediate layer, a dry blend of APET1 and PA1 at a weight ratio of 40:60.

(Example 16)

A preform, a bottle and a biaxially stretched sheet were formed and measured in the same manner as in Example 1 but throwing, into the hopper of the injection-molding machine for forming the intermediate layer, a dry blend of APET1 and PA1 at a weight ratio of 30:70.

(Example 17)

By using PA 2 as the base material, there was prepared, by the above method, a pelletized master batch resin (MB3) containing the layered silicate component 1 in an amount of 3% by weight in the resin composition.

By using the co-injection molding machine, there was molded a multilayered preform of a two-material -three-layer constitution (PET/intermediate layer/PET). To the hopper of the injection-molding machine for forming the inner and outer PET layers, there was thrown the dried PET1 and to the hopper of the injection-molding machine for forming the intermediate layer, there were thrown the APET1 and MB3 that have been dried being blended at a weight ratio of 70:30, and these materials were co-injection molded. The inner and outer PET layers were set at a temperature of 290°C while the intermediate layer was molded at a temperature of 260°C. The preform weighed 24 g and the ratio of the intermediate layer was 6% by weight of the whole bottle. The preform was so molded that the intermediate layer reached neither the mouth/neck portion nor the bottom portion.

Next, the multilayered preform was biaxially stretch-blow-molded into a multilayered bottle by the above-mentioned method. The obtained preform and the bottle were measured for their haze in the body portion of the preform, haze in the body portion of the bottle, carbonic acid gas-barrier property of the bottle and interlayer peeling by the methods described above.

Further, the dried APET1 was fed into the hopper of the injection-molding machine and was injection-molded while setting the temperature of the barrel at 280°C to obtain an injection-molded plate of a size of 90 x 90 x 1.5 mm. The injection-molded plate was biaxially stretched into 3 x 3 times simultaneously by the method described above to obtain a biaxially stretched sheet. The PA 2, too, was similarly injection-molded into a plate and was biaxially stretched into a sheet. Here, however, the temperature of the barrel was set at 260°C. The stretched sheets were measured for their refractive indices by the method described above to calculate their refractive indices and a difference $\Delta$RI of the refractive index.

(Example 18)

A preform and a bottle were molded and measured in the same manner as in Example 4 but throwing, into the hopper of the injection-molding machine for forming the intermediate layer, a dry blend of APET2, PET1 and PA1 at a weight ratio of 52.5:17.5:30.

Further, a biaxially stretched sheet was formed and measured in the same manner as in Example 4 but feeding, into the hopper of the injection-molding machine, a dry blend of APET2 and PET1 at a weight ratio of 3:1.

(Example 19)

A preform and a bottle and were molded and measured in the same manner as in Example 4 but throwing, into the hopper of the injection-molding machine for forming the intermediate layer, a dry blend of APET2, PET1 and PA1 at a weight ratio of 35:35:30.

Further, a biaxially stretched sheet was formed and measured in the same manner as in Example 4 but feeding, into the hopper of the injection-molding machine, a dry blend of APET2 and PET1 at a weight ratio of 1:1.

(Example 20)

A preform, a bottle and a biaxially stretched sheet were formed and measured in the same manner as in Example 4 but throwing, into the hopper of the injection-molding machine for forming the intermediate layer, a dry blend of APET2 and PET1 at a weight ratio of 60:40.

(Example 21)

A preform, a bottle and a biaxially stretched sheet were formed and measured in the same manner as in Example 4 but throwing, into the hopper of the inj ection-molding machine for forming the intermediate layer, a dry blend of APET2 and PET1 at a weight ratio of 50:50.

(Example 22)

By using APET2 as the base material, there was prepared, by the above method, a pelletized master batch resin (MB4) containing the oxidizing catalyst 1 in an amount of 500 ppm calculated as metal in the resin composition. The temperature of the barrel was maintained at 280°C.

By using the co-injection molding machine, there was molded a multilayered preform of a two-material -three-layer constitution (PET/intermediate layer/PET). To the hopper of the injection-molding machine for forming the inner and outer PET layers, there was thrown the dried PET1 and to the hopper of the injection-molding machine for forming the intermediate layer, there were thrown the MB4, APET2 and PA1 that have been dried being blended at a weight ratio of 70:20:10, and these materials were co-injection molded. The inner and outer PET layers were set at a temperature of 290°C while the intermediate layer was molded at a temperature of 280°C. The preform weighed 24 g and the ratio of the intermediate layer was 6% by weight of the whole bottle. The preform was so molded that the intermediate layer reached neither the mouth/neck portion nor the bottom portion.

Next, the multilayered preform was biaxially stretch-blow-molded into a multilayered bottle by the above-mentioned method. The obtained preform and the bottle were measured for their haze in the body portion of the preform, haze in the body portion of the bottle, oxygen-barrier property of the bottle and interlayer peeling by the methods described above.

Further, the dried APET2 was fed into the hopper of the injection-molding machine and was injection-molded while setting the temperature of the barrel at 280°C to obtain an injection-molded plate of a size of 90 x 90 x 1.5 mm. The injection-molded plate was biaxially stretched into 3 x 3 times simultaneously by the method described above to obtain a biaxially stretched sheet. The PA1, too, was similarly injection-molded into a plate and was biaxially stretched into a sheet. Here, however, the temperature of the barrel was set at 260°C. The stretched sheets were measured for their refractive indices by the method described above to calculate their refractive indices and a difference $\Delta$RI of the refractive index.

(Example 23)

A preform, a bottle and a biaxially-stretched sheet were formed and measured in the same manner as in Example 22 but throwing, into the hopper of the injection-molding machine for forming the intermediate layer, a dry blend of MB4, APET2 and PA1 at a weight ratio of 70:10:20.

(Example 24)

A preform, a bottle and a biaxially-stretched sheet were formed and measured in the same manner as in Example 22 but throwing, into the hopper of the injection-molding machine for forming the intermediate layer, a dry blend of MB4 and PA1 at a weight ratio of 70:30.

(Example 25)

A preform, a bottle and a biaxially-stretched sheet were formed and measured in the same manner as in Example 4 but changing the ratio of the intermediate layer in the bottle into 3% by weight.

(Example 26)

A preform, a bottle and a biaxially-stretched sheet were formed and measured in the same manner as in Example 4 but changing the ratio of the intermediate layer in the bottle into 10% by weight.

(Example 27)

A preform, a bottle and a biaxially-stretched sheet were formed and measured in the same manner as in Example 22 but throwing, into the hopper of the injection-molding machine for forming the intermediate layer, a dry blend of MB4, APET2 and PA1 at a weight ratio of 70:20:10 and, further, changing the ratio of the intermediate layer in the bottle into 25% by weight.

(Example 28)

A preform and a bottle were molded and measured in the same manner as in Example 4 but throwing, into the hopper of the injection-molding machine for forming the intermediate layer, a dry blend of APET 2 and MB2 at a weight ratio of 70: 30, and forming the intermediate layer at a temperature of 280°C.

Further, a biaxially-stretched sheet was formed and measured in the same manner as in Example 4 but feeding the APET2 to the hopper of the injection-molding machine.

(Example 29)

A preform, a bottle and a biaxially-stretched sheet were formed and measured in the same manner as in Example 4 but throwing, into the hopper of the injection-molding machine for forming the intermediate layer, a dry blend of APET2 and PA1 at a weight ratio of 40:60.

(Example 30)

A preform, a bottle and a biaxially-stretched sheet were formed and measured in the same manner as in Example 4 but throwing, into the hopper of the injection-molding machine for forming the intermediate layer, a dry blend of APET2 and PA1 at a weight ratio of 30:70.

(Example 31)

A preform and a bottle were molded and measured in the same manner as in Example 17 but throwing, into the hopper of the injection-molding machine for forming the intermediate layer, a dry blend of APET2 and MB3 at a weight ratio of 70:30, and forming the intermediate layer at a temperature of 280°C.

Further, a biaxially-stretched sheet was formed and measured in the same manner as in Example 17 but feeding the APET 2 to the hopper of the injection-molding machine.

(Comparative Example 1)

By using the co-injection molding machine but without operating the injection-molding machine for forming the intermediate layer, there was molded a single-layered preform weighing 24 g by throwing the PET1 into the hopper of the injection-molding machine for forming the inner and outer PET layers while setting the temperature at 290°C. The single-layered PET preform was biaxially stretch-blow-molded into a single-layered PET bottle by the method described above.

The obtained preform and the bottle were measured for their haze in the body portion of the preform, haze in the body portion of the bottle, carbonic acid gas-barrier property of the bottle and oxygen-barrier property of the bottle by the methods described above.

(Comparative Example 2)

It was attempted to form a single-layered bottle in the same manner as in Comparative Example 1 but throwing, into the hopper of the injection-molding machine for forming the inner and outer PET layers, a dry blend of APET1 and PA1 at a weight ratio of 70: 30. However, the bottle having a uniform thickness profile could not be molded. Therefore, no measurement was taken.

(Comparative Example 3)

A preform and a bottle were molded and measured in the same manner as in Example 1 but throwing, into the hopper of the injection-molding machine for forming the intermediate layer, a dry blend of PET1 and PA1 at a weight ratio of 70:30, and forming the intermediate layer at a temperature of 280°C.

Further, a biaxially-stretched sheet was formed and measured in the same manner as in Example 1 but feeding the PET1 to the hopper of the injection-molding machine.

(Comparative Example 4)

A preform and a bottle were molded and measured in the same manner as in Example 1 but throwing, into the hopper of the injection-molding machine for forming the intermediate layer, a dry blend of APET1, PET1 and PA1 at a weight ratio of 17.5:52.5:30, and forming the intermediate layer at a temperature of 280°C.

Further, a biaxially-stretched sheet was formed and measured in the same manner as in Example 1 but feeding, to the hopper of the injection molding machine, a dry blend of APET1 and PET1 at a weight ratio of 1:3.

(Comparative Example 5)

A preform, a bottle and a biaxially-stretched sheet were formed and measured in the same manner as in Comparative Example 3 but throwing, into the hopper of the inj ection-molding machine for forming the intermediate layer, a dry blend of PET1 and PA1 at a weight ratio of 60:40.

(Comparative Example 6)

A preform, a bottle and a biaxially-stretched sheet were formed and measured in the same manner as in Comparative Example 3 but throwing, into the hopper of the inj ection-molding machine for forming the intermediate layer, a dry blend of PET1 and PA1 at a weight ratio of 50:50.

(Comparative Example 7)

A preform and a bottle were molded and measured in the same manner as in Example 7 but preparing a pelletized master batch resin (MB5) by using the PET1 as the base material of the pelletized master batch resin, throwing, into the hopper of the injection-molding machine for forming the intermediate layer, a dry blend of MB5, PET1 and PA1 at a weight ratio of 70:10:20, and forming the intermediate layer at a temperature of 280°C. Further, a biaxially-stretched sheet was formed and measured in the same manner as in Example 7 but feeding the PET1 to the hopper of the injection molding machine.

(Comparative Example 8)

A preform, a bottle and a biaxially-stretched sheet were formed and measured in the same manner as in Comparative Example 7 but throwing, into the hopper of the inj ection-molding machine for forming the intermediate layer, a dry blend of MB3 and PA1 at a weight ratio of 70:30.

(Comparative Example 9)

A preform, a bottle and a biaxially-stretched sheet were formed and measured in the same manner as in Comparative Example 3 but changing the ratio of the intermediate layer in the bottle into 3% by weight.

(Comparative Example 10)

A preform, a bottle and a biaxially-stretched sheet were formed and measured in the same manner as in Comparative Example 3 but changing the ratio of the intermediate layer in the bottle into 10% by weight.

(Comparative Example 11)

A preform and a bottle were molded and measured in the same manner as in Example 14 but throwing, into the hopper of the injection-molding machine for forming the intermediate layer, a dry blend of PET1 and MB2 that have been dried at a weight ratio of 70:30, and forming the intermediate layer at a temperature of 280°C.
Further, a biaxially-stretched sheet was formed and measured in the same manner as in Example 14 but feeding the PET1 to the hopper of the injection molding machine.
Properties of the resins in the above Examples were as shown in Table 1 and the measured results were as shown in Table 2.

Table 1

| | Layer constitution | *1 | *2 | | | *6 | | Oxidizing catalyst | | *10 |
| | | | *3 | *4 | *5 | *7 | *8 | Chemical species | *9 | *11 |
|---|---|---|---|---|---|---|---|---|---|---|
| Ex. 1 | 2-kind-3-layer | 6 | 15.0 | 0 | 3.6 | PA1 | 30 | none | | none |
| Ex. 2 | 2-kind-3-layer | 6 | 11.7 | 0 | 3.3 | PA1 | 30 | none | | none |
| Ex. 3 | 2-kind-3-layer | 6 | 8.4 | 0 | 2.9 | PA1 | 30 | none | | none |
| Ex. 4 | 2-kind-3-layer | 6 | 0.0 | 30 | 2.3 | PA1 | 30 | none | | none |

(continued)

| | Layer constitution | | *2 | | | *6 | | Oxidizing catalyst | | *10 |
|---|---|---|---|---|---|---|---|---|---|---|
| | | *1 | *3 | *4 | *5 | *7 | *8 | Chemical species | *9 | *11 |
| Ex. 5 | 2-kind-3-layer | 6 | 15.0 | 0 | 3.6 | PA1 | 40 | none | | none |
| Ex. 6 | 2-kind-3-layer | 6 | 15.0 | 0 | 3.6 | PA1 | 50 | none | | none |
| Ex. 7 | 2-kind-3-layer | 6 | 15.0 | 0 | 3.6 | PA1 | 5 | oxidizing catalyst 1 | 350 | none |
| Ex. 8 | 2-kind-3-layer | 6 | 15.0 | 0 | 3.6 | PA1 | 10 | oxidizing catalyst 1 | 350 | none |
| Ex. 9 | 2-kind-3-layer | 6 | 15.0 | 0 | 3.6 | PA1 | 20 | oxidizing catalyst 1 | 350 | none |
| Ex. 10 | 2-kind-3-layer | 6 | 15.0 | 0 | 3.6 | PA1 | 30 | oxidizing catalyst 1 | 350 | none |
| Ex. 11 | 2-kind-3-layer | 3 | 15.0 | 0 | 3.6 | PA1 | 30 | none | | none |
| Ex. 12 | 2-kind-3-layer | 10 | 15.0 | 0 | 3.6 | PA1 | 30 | none | | none |
| Ex. 13 | 2-kind-3-layer | 25 | 15.0 | 0 | 3.6 | PA1 | 10 | oxidizing catalyst 1 | 350 | none |
| Ex. 14 | 2-kind-3-layer | 6 | 15.0 | 0 | 3.6 | MB2 | 30 | oxidizing catalyst 1 | 105 | none |
| Ex. 15 | 2-kind-3-layer | 6 | 15.0 | 0 | 3.6 | PA1 | 60 | none | | none |
| Ex. 16 | 2-kind-3-layer | 6 | 15.0 | 0 | 3.6 | PA1 | 70 | none | | none |
| Ex. 17 | 2-kind-3-layer | 6 | 15.0 | 0 | 3.6 | MB3 | 70 | none | | 3 |
| Ex. 18 | 2-kind-3-layer | 6 | 0.4 | 22.5 | 2.3 | PA1 | 30 | none | | none |
| Ex. 19 | 2-kind-3-layer | 6 | 0.9 | 15.0 | 2.3 | PA1 | 30 | none | | none |
| Ex. 20 | 2-kind-3-layer | 6 | 0 | 30.0 | 2.3 | PA1 | 40 | none | | none |
| Ex. 21 | 2-kind-3-layer | 6 | 0 | 30.0 | 2.3 | PA1 | 50 | none | | none |
| Ex. 22 | 2-kind-3-layer | 6 | 0 | 30.0 | 2.3 | PA1 | 10 | oxidizing catalyst 1 | 350 | none |
| Ex. 23 | 2-kind-3-layer | 6 | 0 | 30.0 | 2.3 | PA1 | 20 | oxidizing catalyst 1 | 350 | none |
| Ex. 24 | 2-kind-3-layer | 6 | 0 | 30.0 | 2.3 | PA1 | 30 | oxidizing catalyst 1 | 350 | none |
| Ex. 25 | 2-kind-3-layer | 3 | 0 | 30.0 | 2.3 | PA1 | 30 | none | | none |
| Ex. 26 | 2-kind-3-layer | 10 | 0 | 30.0 | 2.3 | PA1 | 30 | none | | none |
| Ex. 27 | 2-kind-3-layer | 25 | 0 | 30.0 | 2.3 | PA1 | 10 | oxidizing catalyst 1 | 350 | none |
| Ex. 28 | 2-kind-3-layer | 6 | 0 | 30.0 | 2.3 | MB2 | 30 | oxidizing catalyst 1 | 105 | none |
| Ex. 29 | 2-kind-3-layer | 6 | 0 | 30.0 | 2.3 | PA1 | 60 | none | | none |
| Ex. 30 | 2-kind-3-layer | 6 | 0 | 30.0 | 2.3 | PA1 | 70 | none | | none |
| Ex. 31 | 2-kind-3-layer | 6 | 0 | 30.0 | 2.3 | MB3 | 70 | none | | 3 |
| Comp. Ex. 1 | single PET layer | 0 | | | | | | | | |
| Comp. Ex. 3 | 2-kind-3-layer | 6 | 1.8 | 0 | 2.3 | PA1 | 30 | none | | none |
| Comp. Ex. 4 | 2-kind-3-layer | 6 | 5.1 | 0 | 2.6 | PA1 | 30 | none | | none |
| Comp. Ex. 5 | 2-kind-3-layer | 6 | 1.8 | 0 | 2.3 | PA1 | 40 | none | | none |
| Comp. Ex. 6 | 2-kind-3-layer | 6 | 1.8 | 0 | 2.3 | PA1 | 50 | none | | none |
| Comp. Ex. 7 | 2-kind-3-layer | 6 | 1.8 | 0 | 2.3 | PA1 | 20 | oxidizing catalyst 1 | 350 | none |
| Comp. Ex. 8 | 2-kind-3-layer | 6 | 1.8 | 0 | 2.3 | PA1 | 30 | oxidizing catalyst 1 | 350 | none |
| Comp. Ex. 9 | 2-kind-3-layer | 3 | 1.8 | 0 | 2.3 | PA1 | 30 | none | | none |
| Comp. Ex. 10 | 2-kind-3-layer | 10 | 1.8 | 0 | 2.3 | PA1 | 30 | none | | none |

(continued)

| | Layer constitution | | *1 | *2 | | | *6 | | Oxidizing catalyst | | *10 |
|---|---|---|---|---|---|---|---|---|---|---|---|
| | | | | *3 | *4 | *5 | *7 | *8 | Chemical species | *9 | *11 |
| Comp. Ex. 11 | 2-kind-3-layer | | 6 | 1.8 | 0 | 2.3 | MB2 | 30 | oxidizing catalyst 1 | 105 | none |

*1: Ratio of intermediate layer (wt.%),
*2: Copolymerizable components of low crystalline ethylene terephthalate polyesters (mol%),
*3: Isophthalic acid, *4: Cyclohexanedimethanol, Diethylene glycol,
*6: Aromatic polyamide type gas-barrier resin, *7: Resin species,
*8: Blended ratio in the intermediate layer (wt.%),
*9: Blended ratio in the intermediate layer (calculated as metal), ppm,
*10: Lamellar silicate, *11: Blended ratio in the gas-barrier resin (%)

Table 2

| | Haze (%) | | *3 | | | *7 | | |
|---|---|---|---|---|---|---|---|---|
| | *1 | *2 | *4 | *5 | *6 | $RI_E$ | $RI_A$ | $\triangle RI$ |
| Ex. 1 | 10.8 | 2.6 | -7.96 | | no | 1.589 | 1.586 | 0.003 |
| Ex. 2 | 11.9 | 2.4 | -8.27 | | no | 1.601 | 1.586 | 0.015 |
| Ex. 3 | 14.0 | 3.0 | -7.84 | | no | 1.612 | 1.586 | 0.026 |
| Ex. 4 | 53.6 | 2.1 | -8.56 | | no | 1.58 | 1.586 | 0.006 |
| Ex. 5 | 9.7 | 2.4 | -7.12 | | no | 1.589 | 1.586 | 0.003 |
| Ex. 6 | 9.2 | 1.9 | -6.39 | | no | 1.589 | 1.586 | 0.003 |
| Ex. 7 | 7.7 | 0.9 | | 1.746 | no | 1.589 | 1.586 | 0.003 |
| Ex. 8 | 11.7 | 1.5 | | 0.846 | no | 1.589 | 1.586 | 0.003 |
| Ex. 9 | 10.1 | 2.1 | | 0.461 | no | 1.589 | 1.586 | 0.003 |
| Ex. 10 | 13.8 | 2.3 | | 0.492 | no | 1.589 | 1.586 | 0.003 |
| Ex. 11 | 5.4 | 2.0 | -8.70 | | no | 1.589 | 1.586 | 0.003 |
| Ex. 12 | 18.9 | 3.0 | -7.40 | | no | 1.589 | 1.586 | 0.003 |
| Ex. 13 | 28.7 | 2.8 | | 0.380 | no | 1.589 | 1.586 | 0.003 |
| Ex. 14 | 8.2 | 2.8 | | 0.533 | no | 1.589 | 1.58 | 0.009 |
| Ex. 15 | 10.0 | 1.9 | -6.29 | | yes | 1.589 | 1.586 | 0.003 |
| Ex. 16 | 9.5 | 1.4 | -6.21 | | yes | 1.589 | 1.586 | 0.003 |
| Ex. 17 | 12.8 | 2.8 | -5.14 | | yes | 1.589 | 1.58 | 0.009 |
| Ex. 18 | 39.7 | 1.5 | -8.58 | | no | 1.585 | 1.586 | 0.001 |
| Ex. 19 | 24.0 | 2.6 | -8.04 | | no | 1.601 | 1.586 | -0.015 |
| Ex. 20 | 36.5 | 2.1 | -7.86 | | no | 1.580 | 1.586 | 0.006 |
| Ex. 21 | 40.1 | 1.3 | -6.35 | | no | 1.580 | 1.586 | 0.006 |
| Ex. 22 | 17.6 | 1.6 | | 1.912 | no | 1.580 | 1.586 | 0.006 |
| Ex. 23 | 36.2 | 2.6 | | 0.577 | no | 1.580 | 1.586 | 0.006 |
| Ex. 24 | 42.5 | 2.7 | | 0.429 | no | 1.580 | 1.586 | 0.006 |
| Ex. 25 | 30.3 | 1.6 | -9.08 | | no | 1.580 | 1.586 | 0.006 |
| Ex. 26 | 64.8 | 2.9 | -8.13 | | no | 1.580 | 1.586 | 0.006 |

(continued)

|  | Haze (%) | | *3 | | | *7 | | |
|---|---|---|---|---|---|---|---|---|
|  | *1 | *2 | *4 | *5 | *6 | RI$_E$ | RI$_A$ | $\Delta$RI |
| Ex. 27 | 69.8 | 2.5 | | 0.497 | no | 1.580 | 1.586 | 0.006 |
| Ex. 28 | 28.4 | 2.0 | | 0.512 | no | 1.580 | 1.580 | 0.000 |
| Ex. 29 | 38.3 | 1.5 | -6.47 | | yes | 1.580 | 1.586 | 0.006 |
| Ex. 30 | 35.6 | 1.4 | -6.29 | | yes | 1.580 | 1.586 | 0.006 |
| Ex. 31 | 42.5 | 2.7 | -5.50 | | yes | 1.580 | 1.580 | 0.000 |
| Comp. Ex. 1 | 0.4 | 0.8 | -10.08 | 2.693 | | | | |
| Comp. Ex. 3 | 15.6 | 5.4 | -8.01 | | no | 1.632 | 1.586 | 0.046 |
| Comp. Ex. 4 | 11.2 | 5.6 | -7.71 | | no | 1.625 | 1.586 | 0.039 |
| Comp. Ex. 5 | 28.0 | 4.6 | -7.23 | | no | 1.632 | 1.586 | 0.046 |
| Comp. Ex. 6 | 21.4 | 3.6 | -7.00 | | no | 1.632 | 1.586 | 0.046 |
| Comp. Ex. 7 | 12.6 | 4.1 | | 0.539 | no | 1.632 | 1.586 | 0.046 |
| Comp. Ex. 8 | 10.2 | 5.4 | | 0.543 | no | 1.632 | 1.586 | 0.046 |
| Comp. Ex. 9 | 4.6 | 3.1 | -8.60 | | no | 1.632 | 1.586 | 0.046 |
| Comp. Ex. 10 | 26.2 | 12.0 | -7.15 | | no | 1.632 | 1.586 | 0.046 |
| Comp. Ex. 11 | 13.1 | 8.3 | | 0.498 | no | 1.632 | 1.58 | 0.052 |

*1: Body portion of preform
*2: Body portion of bottle
*3: Barrier property of bottle
*4: Carbonic acid gas loss ratio (%)
*5: Dissolved oxygen concentration (ppm)
*6: Interlayer peeling
*7: Refractive index after stretched into 3 x 3 times

Industrial Applicability:

The multilayered stretch-blow-molded container of the present invention has excellent transparency, gas-barrier property and interlayer adhesiveness, and can be favorably used as a pressure-resistant container for which a particularly high degree of gas-barrier property is required.

Description of Reference Numerals:

1 inner layer 2 outer layer
3 intermediate barrier layer 4 intermediate layer
10 multilayered stretch-blow-molded container
11 mouth/neck portion 12 shoulder portion
13 body portion 14 bottom portion

**Claims**

1.  A multilayered stretch-blow-molded container obtained by biaxially stretch-blow-molding a multilayered preform that includes inner and outer layers of an ethylene terephthalate polyester resin, and at least one intermediate layer of a lowly crystallizable ethylene terephthalate polyester resin and a gas-barrier aromatic polyamide resin, wherein:

a difference of refractive index (ΔRI) between said lowly crystallizable ethylene terephthalate polyester resin and said gas-barrier aromatic polyamide resin represented by the following formula (1),

$$\triangle RI = \left| RI_E - RI_A \right| \qquad\qquad (1)$$

wherein $RI_E$ and $RI_A$ are refractive indices of injection-molded plates made, respectively, from the lowly crystallizable ethylene terephthalate polyester resin and the aromatic polyamide resin after they have been biaxially stretched into 3 x 3 times simultaneously, is not more than 0.03, and the haze in the body portion is not more than 3%.

2. A multilayered stretch-blow-molded container according to claim 1, wherein said lowly crystallizable ethylene terephthalate polyester resin contains 7.5 to 15 mol% of isophthalic acid in the dicarboxylic acid component.

3. A multilayered stretch-blow-molded container according to claim 1, wherein said lowly crystallizable ethylene terephthalate polyester resin contains 15 to 30 mol% of cyclohexanedimethanol in the diol component.

4. A multilayered stretch-blow-molded container according to any one of claims 1 to 3, wherein the haze is not less than 5% in a portion where the multilayered structure is formed in the preform.

5. A multilayered stretch-blow-molded container according to any one of claims 1 to 4, wherein the weight ratio of said intermediate layer is 1 to 25% by weight in the whole container.

6. A multilayered stretch-blow-molded container according to any one of claims 1 to 5, wherein said intermediate layer contains at least either an oxygen-absorbing component comprising an oxidizing catalyst and an oxidizing organic component, or a layered silicate.

7. A multilayered preform that includes inner and outer layers of an ethylene terephthalate polyester resin, and at least one intermediate layer of a lowly crystallizable ethylene terephthalate polyester resin and a gas-barrier aromatic polyamide resin, wherein:

said lowly crystallizable ethylene terephthalate polyester resin contains 7.5 to 15 mol% of isophthalic acid in the dicarboxylic acid component or 15 to 30 mol% of cyclohexanedimethanol in the diol component, and the haze is not less than 5% in a portion where the multilayered structure is molded.

8. The multilayered preform according to claim 7, wherein a difference of refractive index (ΔRI) between said lowly crystallizable ethylene terephthalate polyester resin and said gas-barrier aromatic polyamide resin represented by the following formula (1),

$$\triangle RI = \left| RI_E - RI_A \right| \qquad\qquad (1)$$

wherein $RI_E$ and $RI_A$ are refractive indices of injection-molded plates made, respectively, from the lowly crystallizable ethylene terephthalate polyester resin and the aromatic polyamide resin after they have been biaxially stretched into 3 x 3 times simultaneously, is not more than 0.03.

9. The multilayered stretch-blow-molded container according to claim 7 or 8, wherein no multilayered structure is formed in the mouth/neck portion of the preform.

Fig. 1

Fig. 2

Fig. 3

## INTERNATIONAL SEARCH REPORT

| International application No. |
|---|
| PCT/JP2015/051807 |

**A. CLASSIFICATION OF SUBJECT MATTER**
*B29C49/22*(2006.01)i, *B29C49/08*(2006.01)i, *B65D1/00*(2006.01)i, *B65D1/02*
(2006.01)i

According to International Patent Classification (IPC) or to both national classification and IPC

**B. FIELDS SEARCHED**

Minimum documentation searched (classification system followed by classification symbols)
B29C49/22, B29C49/08, B65D1/00, B65D1/02

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2005/014409 A1  (AMCOR LTD.),<br>17 February 2005 (17.02.2005),<br>claims 1, 8 to 10; page 5, lines 4 to 22; page 7, line 16 to page 8, line 20; page 9, table 1; page 15, table 4; page 16, lines 15 to 21; page 17, lines 22 to 24; page 18, lines 3 to 27<br>& EP 1504999 A1 | 1,4,5<br>6,9 |
| X<br>Y | JP 2013-28363 A  (Yoshino Kogyosho Co., Ltd.),<br>07 February 2013 (07.02.2013),<br>claim 1; paragraphs [0011], [0012]; table 2<br>(Family: none) | 1,4,5<br>6,9 |
| Y | JP 2008-18727 A  (Toyo Seikan Kaisha, Ltd.),<br>31 January 2008 (31.01.2008),<br>paragraph [0040]<br>(Family: none) | 6 |

| [×] Further documents are listed in the continuation of Box C. | [ ] See patent family annex. |
|---|---|

\*      Special categories of cited documents:
"A"   document defining the general state of the art which is not considered    to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>    03 April 2015 (03.04.15) | Date of mailing of the international search report<br>    21 April 2015 (21.04.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/051807

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2010-12606 A  (Yoshino Kogyosho Co., Ltd.), 21 January 2010 (21.01.2010), paragraph [0020] & US 2011/0108505 A1    & EP 2311624 A1 & CN 101801641 A       & AU 2009264613 A & CA 2729527 A         & KR 10-2011-0028424 A | 6 |
| Y | JP 2005-239275 A  (Yoshino Kogyosho Co., Ltd.), 08 September 2005 (08.09.2005), claim 1 (Family: none) | 9 |
| A | JP 2011-20373 A  (Ishizuka Glass Co., Ltd.), 03 February 2011 (03.02.2011), paragraphs [0030] to [0035], [0058], [0063] (Family: none) | 1-9 |
| A | JP 2009-24159 A  (Futura Polyesters Ltd.), 05 February 2009 (05.02.2009), entire text; all drawings & US 2008/0319117 A1    & EP 1980590 A1 & KR 10-2008-0091727 A  & CN 101362851 A & TW 200906962 A | 1-9 |
| A | US 2008/0169590 A1  (INVISTA NORTH AMERICA S.A.R.L.), 17 July 2008 (17.07.2008), paragraphs [0002], [0030], [0033] to [0035], [0042] to [0048], [0077], [0082] & WO 2006/025827 A1    & EP 1784300 A & CN 101048275 A | 1-9 |

Form PCT/ISA/210 (continuation of second sheet) (July 2009)

**REFERENCES CITED IN THE DESCRIPTION**

**Patent documents cited in the description**

- JP 2004142444 A
- JP 2005059859 A
- WO 2010035654 A
- JP 5296385 B